# EUROPEAN PATENT APPLICATION

(11) **EP 1 215 896 A1**
(43) Date of publication of application: **19.06.2002**
(21) Application number: 00127376.2
(22) Date of filing: 13.12.2000
(51) Int. Cl.: H04N 5/445

(54) **Method for enriching program information of an electronic program guide**

(71) Applicant: Sony International (Europe) GmbH, 10785 Berlin (DE)
(72) Inventor: Freiburg, Volker, 70327 Stuttgart (DE)
(74) Representative: Müller - Hoffmann & Partner

(57) **Abstract**

A method for enriching program information contained in an electronic program guide with additional information thematically correlated with said program information and a system to perform said method is proposed, said method comprising the steps of creating search information (S1) on the basis of said program information, analyzing data units (S3) provided by data sources on the basis of said search information, if data of a data unit matches said search information, adding link information (S4) preferably presented as selectable link pointing to said data unit as said additional information to said program information. Thus, the user can select the link to directly navigate to data units like teletext pages containing the additional information for the corresponding program information.

## Description

The invention relates to a method for enriching program information contained in an electronic program guide with additional information, and a system to perform said method.

In recent years, the process of accessing information has steadily become easier. Today, there are a lot of different ways how to access information. For example, information can be accessed via the internet, via broadcasting or via SMS (short message service)/WAP (wireless application protocol) enabled mobile phones. If information is transmitted via broadcasting, it is common to transmit electronic program guide information besides a main service like an analog or digital video channel, thus enabling a receiving device of a user to construct an electronic program guide. The electronic program guide may be displayed on a display of the receiving device in order to facilitate a selection of desired information or programs for the user.

In most cases, each broadcast channel has its own electronic program guide (in the following referred to only as EPG) service transmitted besides a main service of this broadcast channel. Therefore, when tuning to a specific broadcast channel, the user normally only gets information about programs correlated with this specific broadcast channel.

To improve this situation, documents WO 00/56067 A1 and WO 00/56066 A1 propose program interfaces for electronic program guide information which enable a receiving device to collect EPG data from multiple EPG data sources by way of EPG loaders. Each EPG loader collects EPG data from a particular source like a broadcast channel and delivers the EPG data to a writer module which performs scaling and formating functions to the EPG data. Thus, EPG data from multiple EPG data sources are merged with each other, enabling the user to have a good overview about what is going on in several broadcast channels without tuning to each of them to extract the respective EPG data.

It is an object of the present invention to further improve the quality of the program information contained in an EPG.

To solve this object, the present invention provides a method for enriching program information contained in an electronic program guide with additional information thematically correlated with said program information, comprising the steps of
a) creating search information on the basis of said program information,
b) analyzing data units provided by data sources on the basis of said search information,
c) if data of a data unit matches said search information, adding link information pointing to said data unit as said additional information to said program information.

Further, the present invention provides a system for enriching program information contained in an electronic program guide with additional information thematically correlated with said program information, said system having access to said program information, comprising:
- search information creating means for creating search information on the basis of said program information,
- analyzing means being connected to said search information creating means for analyzing data units provided by data sources being connectable to said system on the basis of said search information,
- link information adding means being connected to said analyzing means for adding link information as said additional information to said program information, wherein said link information is added to said program information according to a result of said analyzing means, and points to data units analyzed by said analyzing means.

Preferred embodiments of this method and system which are defined in independent claims 1 and 18, respectively, are defined in the respective dependent claims.

The present invention makes it possible to enrich program information of an EPG with additional information even if there is no direct editorial relationship between the program information of an EPG and the additional information provided by the data sources. In other words, although the additional information may not be structured and designed in a manner suitably to be used in conjunction with program information of an EPG, it is possible to transparently include this additional information within the program information of the EPG.

This is done by adding link information pointing to a data unit provided by a data source to said program information. To obtain said link information, search information is created in a first step on the basis of already available program information of the EPG. Then, in a second step, additional data contained in data units like internet pages or teletext pages provided by data sources is analyzed on the basis of said search information created in the first step. If it is found that data of a data unit is thematically correlated with the search information, link information is created and added as additional information to the program information of the EPG in order to enable the user to navigate to said data unit when reading a program information entry thematically corresponding to the data detected in said data unit.

The step of analyzing the data provided by data sources may be performed by actively "visiting" the data sources, or by passively receiving data sent from the data sources. In the latter case, the data sources may be realized as data sources "automatically" providing data. For example, a user may subscribe himself to a news service like an e-mail service. Then, the news service for example sends in regular time intervals news data to the analyzing means of a receiving device like a television device. The analyzing means "automatically" analyzes data arriving from the news service on the basis of the search patterns.

The link information is preferably presented as selectable link on a display, so that the user has only to select the link to be automatically conducted to a corresponding data unit like a teletext page providing additional information correlated to the program information of the EPG. This means that at least a part of the link information is address information. However, the link information may additionally comprise parts of the additional information contained in the corresponding data unit, for example parts of text passages of the data unit in order to enable the user to judge whether it is worth to navigate to said data unit. The link information may also be restricted to address information not accessable via the receiving system of the EPG Information itself. For example, the address information may comprise an internet address which is not acccessable by a broadcast receiving device receiving the EPG program information. However, the user may enter this link information in a seperate device like an internet enabeled computing device to navigate to the corresponding internet page.

Preferably, at least parts of the program information contained in the EPG are transformed into search patterns according to a first transformation algorithm to create the search information. The first transformation algorithm may perform tasks like removing mark-up information not suitable as search information, reducing an alphabet size, and performing data compression of the program information. Thus, the quality of the search information is improved, which reduces the sensitivity of search results with respect to small differences of different program information elements. To further improve the search results, at least parts of the data contained in the data units of the data sources to be analyzed are transformed according to a second transformation algorithm to obtain transformed data units before analyzing the transformed data units on the basis of the search patterns.

The second transformation algorithm may at least partially perform the same tasks as those performed by the first transformation algorithm, which would make it possible that a very effective comparison process between the search patterns and the transformed data of the data units is possible. That is, preferably at least parts of the first and the second transformation algorithms are identical.

To create the search patterns during the first step, only specific program information elements may be used as input data for the first algorithm to create the search patterns. For example, only title elements of the program information may be processed in the first step to obtain the search patterns. Another example is to take into account time information of services periodically broadcasted.

The search patterns created in step a) and/or program information elements are preferably arranged as components of respective search index entries of a search Index. That is, each search index entry comprises at least one search pattern and/or at least one program information element and/or at least one reference to a respective program information element.

Preferably, after having created link information pointing to a data unit during step c), the link information is added to a corresponding search index entry as component of this search index entry, respectively. The whole search index or parts of it may be sorted/arranged in different ways, for example in an alphabetic order.

In a preferred embodiment, several search indices are created, each search index corresponding to a different EPG and/or data source. For example, different search indices may be assigned to different teletext sevices as data sources, respectively, each search index containing search patterns derived from program information concerning the corresponding channel only. If, for example, the EPG has program information elements a[1] to a[n] for a channel A, and program information elements b[1] to b[n] for a channel B, it is beneficial to restrict search space by having one search index for channel A with search patterns derived from a[1] to a[n], and another different search index for channel B with search patterns derived from b[1] to b[n].

Preferably, each created link information is added as an additional component of a corresponding search index entry to the search index. Thus, after having analyzed the data units provided by the data sources, the results of said analyzing process may be condensed in form of extended search index entries. Thus, program information entries like program events of the EPG can instantly be supplemented by one or more references to data units like teletext pages if corresponding link information is found within the search index. In this case, the search index may be regarded as a representation of all EPG data available to the user, and visualizing units of the system may use the search index to display the search index data as enriched EPG program information on a display.

The steps of creating search information (step a)), and/or analyzing data units of data sources (step b)), and/or adding link information (step c)) are preferably performed as background process. For example, while the user is watching a video channel as a main service, only data of data sources provided along this channel may be analyzed and processed. When the user switches to standby operation, each receivable broadcast channel is tuned individually to analyze and process corresponding data units of data sources provided on the respective channel. Such an embodiment may be used if the receiving device only shows a single tuner input for analog or digital broadcast. If, for example, the receiving device shows two tuner inputs, one tuner input may be used for receiving a main service, whereas the other channel may be used for background processing of all receivable additional data sources of different channels.

The system preferably comprises a database for storing the EPG program information, search indices including the search patterns and the link information as well as data of data units provided by said data sources.

It has become apparent from the foregoing description that teletext, EPG and other side services which are delivered via analog or digital broadcast like video broadcast are usually originating from distinct editorial services, and therefore lack references between thematically correlated information elements across different channels. Although a teletext service may provide a structured table of contents, navigation to the channel which transports the service is restricted. A user who wants to access teletext information related to a program event found in an EPG, for example, is forced to select the corresponding channel broadcasting the event manually, and to navigate through teletext data pages provided on this channel to eventually find correlated information. The present invention facilitates this process by automatically constructing an online search index in a background process without requiring user interaction with a search tool window, for example. Search results being part of the search index can be embedded in the EPG display instantly.

Further features and advantages of a preferred embodiment of a method according to the present invention will be explained below in conjunction with the accompanying drawing, in which

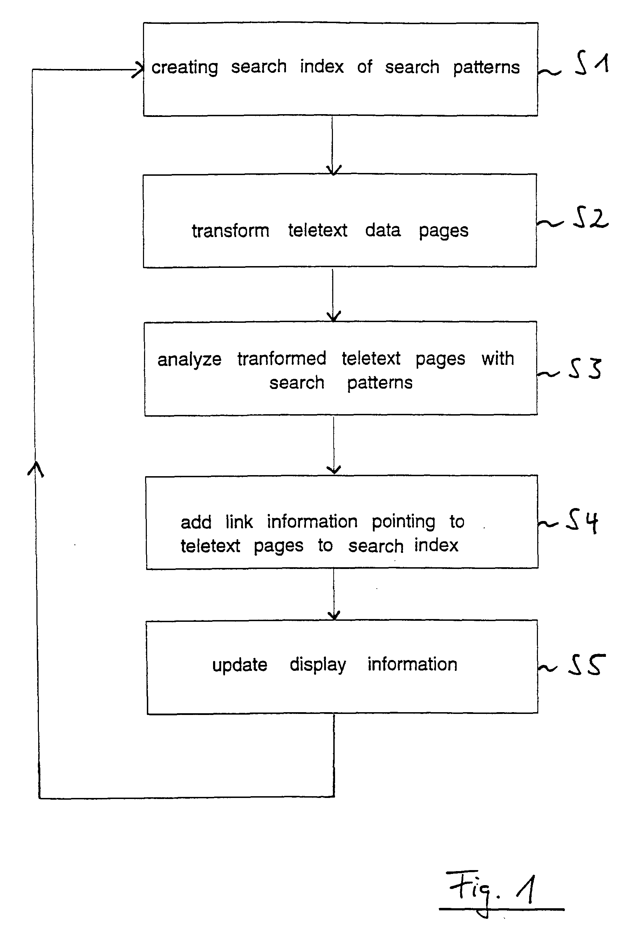

**Fig. 1** shows a flow chart of a preferred embodiment of the method according to the present invention.

In the following description, making reference to Fig. 1, a preferred embodiment of a method for enriching program information of an EPG is described.

In a first step S1, title elements as EPG program information elements are transformed into corresponding search patterns, thereby constructing a search index. In a second step S2, teletext pages as data units decoded by a teletext decoder are transformed with the same transformation applied to the title elements in the first step S1. Then, in a third step S3, the transformed teletext pages are analyzed on the basis of the search patterns obtained in the first step S1 to see if any data contained in a teletext page matches with the search patterns. In case of a match, link information to the corresponding teletext page is added as additional component of a corresponding search index entry to the search index in a fourth step S4. If a user watches the program information of the EPG, the program information is updated in a fifth step S5 by adding the link information contained in the search index as a selectable link to the program information on a display. Then, the system turns again to the first step S1 in order to see if the new EPG program information to be processed has been received via broadcasting.

## Claims

1. Method for enriching program information contained in an electronic program guide with additional information thematically correlated with said program information, comprising the steps of
a) creating search information (S1) on the basis of said program information,
b) analyzing data units (S3) provided by data sources on the basis of said search information,
c) if data of a data unit matches said search information, adding link information (S4) pointing to said data unit as said additional information to said program information.

2. Method according to claim 1, **characterized by** transforming at least parts of said program information contained in said electronic program guide into search patterns according to a first transformation algorithm to create said search information.

3. Method according to claim 2, **characterized by** analyzing said data units on the basis of said search patterns during step b).

4. Method according to claim 2 or 3, **characterized by** transforming at least parts of data contained in the data units according to a second transformation algorithm (S2) to obtain transformed data units before analyzing said transformed data units on the basis of said search patterns.

5. Method according to claim 4, **characterized in that** said first and said second transformation algorithm at least partially perform identical tasks.

6. Method according to anyone of the claims 2 to 5, **characterized by** using said first and/or said second transformation algorithm to remove mark-up information, and/or to reduce an alphabet size, and/or to perform data compression of said program information or of data of said data units.

7. Method according to anyone of the claims 2 to 6, **characterized by** using only specific program information elements being part of said program information as input data in step a) for creating said search patterns.

8. Method according to anyone of the claims 2 to 7, **characterized by** creating a search index having search index entries in step a) and/or in step c), each search index entry comprising at least one of said search patterns and/or at least a part of said program information and/or at least one reference to a respective program information part.

9. Method according to anyone of the claims 2 to 7, **characterized by** creating several search indices, each search index corresponding to a different electronic program guide or data source.

10. Method according to claim 8 or 9, **characterized by** adding said link information to a corresponding search index entry, respectively.

11. Method according to anyone of the preceding claims, **characterized by** presenting said link information as selectable link.

12. Method according to claim 11, **characterized by** conducting a user to a data unit addressed by said link information when the user selects the corresponding selectable link.

13. Method according to anyone of the claims 2 to 12, **characterized in that** steps a) and/or b) and/or c) are performed as a background process.

14. Method according to anyone of the preceding claims, **characterized by** analyzing data sources which provide unstructured data in step b).

15. Method according to anyone of the preceding claims, **characterized by** analyzing teletext data sources in step b).

16. Method according to anyone of the claims 13 to 15, **characterized by** tuning to at least one teletext decoder as a data source and analyzing corresponding decoded teletext data pages to perform step b).

17. Method according to anyone of the preceding claims, **characterized by** analyzing intenet data sources as data sources in step b).

18. System for enriching program information contained in an electronic program guide with additional information thematically correlated with said program information, said system having access to said program information, comprising:
- search information creating means for creating search information on the basis of said program information,
- analyzing means being connected to said search information creating means for analyzing data units provided by data sources being connectable to said system on the basis of said search information,
- link information adding means being connected to said analyzing means for adding link information as said additional information to said program information, wherein said link information is added to said program information according to a result of said analyzing means, and points to data units analyzed by said analyzing means.

19. System according to claim 18, **characterized by** a database for storing said program information of said electronic program guide, search indices including said search patterns and said link information, and data provided by said data sources.

20. System according to claim 19, **characterized by** a display for visualizing data stored in said database.
